# EUROPÄISCHE PATENTSCHRIFT

(11) **EP 2 378 218 B1**
(45) Veröffentlichungstag und Bekanntmachung des Hinweises auf die Patenterteilung: **28.02.2018**
(21) Anmeldenummer: 11162520.8
(22) Anmeldetag: 14.04.2011
(51) Int. Cl.: F24F 13/20, F24F 13/22, B60H 1/00, B60H 1/32

(54) **Klimaanlage**
Air conditioning device
Installation de climatisation

(30) Priorität: 15.04.2010 DE 102010027813
(43) Veröffentlichungstag der Anmeldung: 19.10.2011
(73) Patentinhaber: MAHLE Behr GmbH & Co. KG, 70469 Stuttgart (DE)
(72) Erfinder: Pfander, Andreas, 71384 Weinstadt (DE); Hegner, Hilmar, 70435 Stuttgart (DE)
(74) Vertreter: Grauel, Andreas

(56) Entgegenhaltungen:
- EP-A2- 1 122 103
- EP-A2- 2 062 761

## Beschreibung

Die Erfindung betrifft eine Klimaanlage mit einem zumindest zweiteiligen oder mehrteiligen Gehäuse, wobei die beiden Gehäuseteile über eine Nut-Feder miteinander verbunden sind und das Gehäuse einen Kondensatablauf aufweist. Dabei bedeutet zumindest zwei- oder mehrteilig, dass das Gehäuse aus zwei Teilen oder mehr als zwei Teilen bestehen kann.

Das Patentdokument EP-2062761-A offenbart eine Klimaanlage gemäß dem Oberbegriff des Anspruchs 1. Beim Betrieb von Klimaanlagen entsteht durch das Abkühlen von Luft an der Oberfläche eines Verdampfers Kondenswasser bzw. Kondensat, welches aus der Klimaanlage abgeführt werden muss. Zu diesem Zweck ist es bekannt, an einem zweiteilig ausgebildeten Gehäuse der Klimaanlage einen Schlauchansatz anzubringen. Nach Herstellung der Klimaanlage, das heißt nach dem Einbau, der für die Klimaanlage wichtigen Bauelemente in das zweiteilige Gehäuse, wird das Gehäuse zusammengefügt. In einem abschließenden Arbeitsgang wird an den Schlauchansatz von einer Arbeitskran ein Schlauch aufgesetzt. Durch diesen Schlauch wird das Kondenswasser an die Umgebung abgegeben. Das Aufstecken des Schlauches erfordert einen zusätzlichen Arbeitsschritt, welcher den automatischen Arbeitsablauf bei der Cockpitmontage stört. Außerdem wird zusätzlich Arbeitszeit und Material durch diesen Arbeitsschritt notwendig.

Der Erfindung liegt somit die Aufgabe zu Grunde, eine Klimaanlage anzugeben, weiche eine Reduzierung des Zeitaufwandes als auch des Materialaufwandes bei der Herstellung der Klimaanlage ermöglicht und trotzdem einen vollständigen automatischen Prozessablauf ermöglicht.

Erfindungsgemäß wird die Aufgabe durch die Kombination der technischen Merkmale des Anspruch 1 gelöst. Vorteilhafterweise ist der Kondensatablauf einteilig ausgebildet und vollständig in ein Gehäuseteil integriert. Dadurch, dass der Kondensatablauf nur in ein Gehäuseteil eingearbeitet wird, vereinfacht sich die Herstellung des zweiten Gehäuseteiles.
In einer Ausgestaltung ist der Kondensatablauf zweiteilig ausgebildet, wobei jeweils ein Teil des Kondensatablaufes mit einem Gehäuseteil verbunden ist und die beiden Teile des Kondensatablaufes über die Nut-Feder miteinander verbunden sind. Die Gehäusetrennung verläuft dabei genau durch den Kondensatablauf, wobei Kondensatablauf und Gehäuse über die Nut-Feder gleichzeitig in einem einzigen Arbeitsschritt verbunden werden. Da jedes Gehäuseteil einen Teil des Kondensatablaufes enthält, wird der Kondensatablauf einfach beim Zusammenfügen des Gehäuses als Ganzes hergestellt.

In einer Variante ist an jedem Gehäuseteil ein Teil der eben gestalteten Platte integriert, welche die Hälfte der durchgängigen Öffnung aufweist, wobei die Öffnung in Richtung der Nut-Feder weist. Dabei wird die Öffnung in die Nut-Feder integriert. Aufgrund dieser Vorgehensweise ist eine Verwendung von Flachwerkzeugen möglich, welche die beiden Teile der eben ausgebildeten Platte mit der Nut-Feder einfach zusammenfügen, indem sie parallel zur Platte angreifen. Die verwendeten Werkzeuge sind dabei konstruktiv einfach ausgebildet, da sie der Geometrie der ebenen Platte angeglichen sind.

In einer Weiterbildung ist jedes Gehäuseteil einteilig mit dem Kondensatablauf bzw. einem Teil des Kondensatablaufes ausgebildet. Dies vereinfacht die Herstellung des Gehäuseteiles bzw. des Kondensatablaufes, welche nicht in zwei verschiedenen Vorgängen hergestellt werden müssen, sondern in einem gemeinsamen Herstellungsvorgang aufgebaut werden.

Vorteilhafterweise ist das einteilig mit dem Kondensatablauf bzw. einem Teil des Kondensatablaufes ausgebildete Gehäuseteil aus Kunststoff hergestellt. Durch die Verwendung von Kunststoff vermindert sich das Gewicht der Klimaanlage und es können die verschiedensten Formen von Gehäuse und Kondensatablauf in einem Arbeitsschritt erzeugt werden.

In einer Weiterbildung ist das einteilig mit dem Kondensatablauf bzw. einem Teil des Kondensatablaufes ausgebildete Gehäuseteil in einem Spritzgussprozess hergestellt. In einem solchen Vorgang lassen sich Gehäuseteil und Kondensatablauf in besonders einfacher Weise integrieren und müssen anschließend nur noch durch die Nut-Feder verbunden werden.
Ferner weist jedes Gehäuseteil eine Kondenswasserschräge auf, welche in den Kondensatablauf mündet. Eine solche Kondenswasserschräge hat den Vorteil, dass das sich am Verdampfer der Klimaanlage bildende Kondenswasser gezielt in den Kondensatablauf geleitet wird und von diesem an die Umgebung abgegeben wird.

In einer weiteren Ausführungsform ist die Nut-Feder wenigstens im Bereich des Kondensatablaufes wasserdicht gestaltet. Damit wird sichergestellt, dass das Kondenswasser sich nicht im Gehäuse verteilt, sondern gezielt in die Öffnung des Kondensatablaufes abfließt. Ein Austreten des Kondenswassers durch die Nut-Feder wird somit zuverlässig verhindert,

Vorteilhafterweise ist die Nut-Feder geschweißt. Vorzugsweise wird dabei ein Ultraschallschweißverfahren angewendet. Durch die geschweißte Nut-Feder wird ein besonders dichter Kondensatablauf hergestellt. Dies erfolgt insbesondere in dem Bereich des Gehäuses der Klimaanlage, wo sich das Kondenswasser bildet und abgeleitet wird.

Alternativ weist die Nut-Feder mindestens gegenüber dem Kondensatablauf ein dichtendes Element auf. Auch durch ein solches dichtendes Element wird die Wasserdichtheit im Bereich des Kondensatablaufes zuverlässig gewährleistet, Das zusätzlich dichtende Element wird dabei zwischen Gehäuseteil bzw. einem Teil des Kondensatablaufes und der Nut-Feder eingelegt und beim Zusammenpressen der Gehäuseteile mit der Nut-Feder verdichtet.

Besonders einfach ist das dichtende Element durch eine Dichtschnur augebildet, welche lediglich in die Nutfeder eingelegt und verpresst werden muss.

Die Erfindung lässt zahlreiche Ausführungsformen zu. Eine davon soll anhand der in der Zeichnung dargestellten Figuren näher erläutert werden.

Es zeigt:
- Fig. 1:: eine Prinzipdarstellung einer Klimaanlage,
- Fig. 2:: einen Ausschnitt aus der Klimaanlage nach Figur 1,
- Fig.3:: eine Ansicht der Klimaanlage nach Figur 1 von unten,
- Fig. 4:: eine Ansicht des Kondensatablaufes, welcher an der Klimaanlage nach Figur 1 befestigt ist, und
- Fig. 5:: eine seitliche Ansicht der Klimaanlage,

Gleiche Merkmale sind mit gleichen Bezugszeichen gekennzeichnet.

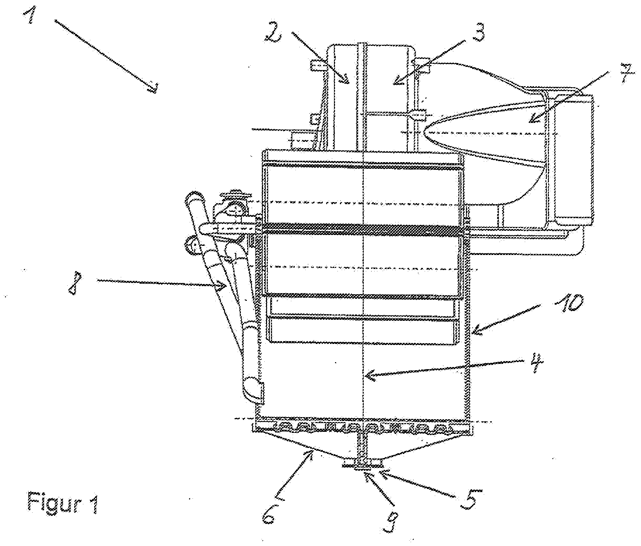

In Figur 1 ist ein Klimagerät 1 dargestellt, welches auch als Klimaanlage bezeichnet wird. Die Klimaanlage 1 besteht aus zwei Gehäuseteilen 2 und 3, welche durch eine Gehäuseverbindung 4 bzw. Gehäusetrennung 4 miteinander verbunden sind. Am unteren Ende der Klimaanlage 1 ist ein Kondensatablauf 5 angeordnet. An dem ersten Teil 2 des Gehäuses ist eine Rohrgruppe 8 angeordnet, während an dem zweiten Teil 3 des Gehäuses ein Lufteintrittsgehäuse 7 befestigt ist, durch welche die Luft der Umgebung bzw. aus dem Fahrgastraum der Klimaanlage 1 zugeleitet wird. Die beiden Teile 2 bzw. 3 des Gehäuses der Klimaanlage 1 umschließen die Teile, welche für die Funktionsweise der Klimaanlage 1 notwendig sind. Der Einfachheit halber ist hier nur der Verdampfer 10 dargestellt, der von beiden Teilen 2, 3 gleichmäßig aufgenommen ist Sowohl das Gehäuseteil 2 als auch das Gehäuseteil 3 weisen eine Konderswasserablaufschräge 6 auf, an welche sich der Kondensatablauf 5 anschließt. Wie aus Figur 1 ersichtlich, verläuft die Gehäusetrennung 4 durch den Kondensatablauf 5 und teilt diesen in zwei Teile. Somit umfasst das Gehäuseteil 2 neben der Rohrgruppe 8 die Kondenswasserschräge 6 und die Hälfte des Kondensatablaufes 5. Dasselbe trifft auch auf das Gehäuseteil 3 der Klimaanlage 1 zu, das ebenfalls die Kondenswasserablaufschräge 6 als auch einen Teil des Kondensatablaufes 5 umfasst.

Die Gehäuseverbindung 4 wird durch eine Nut-Feder-Verbindung, kurz auch 9 genannt, realisiert. Dazu weist ein Teil eine Nut und das andere Teil eine Feder auf, die ineinander steckbar sind.

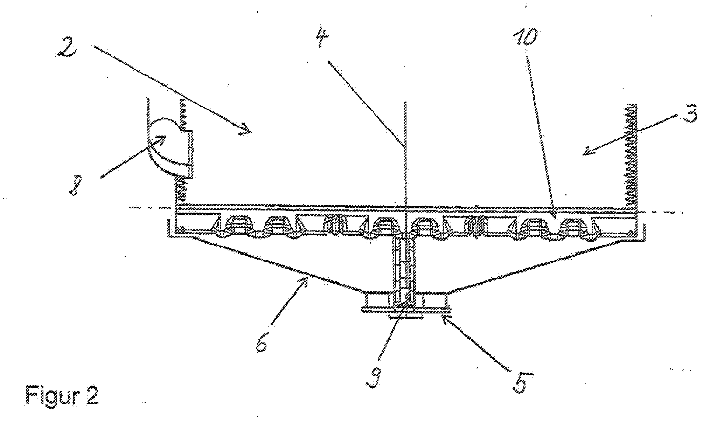

In Figur 2 ist der eben beschriebene Bereich der Klimaanlage 1 näher dargestellt. Die Gehäuseverbindung 4 zwischen den Gehäuseteilen 2 und 3 wird dabei durch eine Nut-Feder 9 realisiert, welche ebenfalls den Kondensatablauf 5, der aus zwei Teilen besteht, verbindet, wobei jeder, eine Halböffnung aufweisende Teil des Kondensatablaufes 5 an einem der beiden Gehäuseteile 2 und 3 der Klimaanlage 1 befestigt ist. Der Kondensatablauf 5 besteht dabei aus einer ebenen Fläche 5a, welche eine Öffnung 5b umschließt. Mit dieser besonders einfachen Ausgestaltung des Kondensatablaufes 5 wird die so gefertigte Klimaanlage 1 in das Kraftfahrzeug, welches nicht näher dargestellt ist, eingesetzt, wobei die ebene Fläche 5a einer annähernd ebenen Flächs des Kraftfahrzeuges gegenüber liegt und die Öffnung 5b des Kondensatablaufes passgenau auf eine weitere Öffnung des Kraftfahrzeuges gesetzt ist. Dadurch vereinfacht sich der Einbauvorgang der Klimaanlage 1 in das Kraftfahrzeug, Auf zusätzliche Bauteile für den Kondensatabgang kann somit verzichtet werden. Durch die Gehäuseverbindung 4 im Bereich des Kondensatablaufes 5, welche die Wasserdichtheit bis zum Kondensatablauf 5 gewährleistet, wird eine ebene Schnittstellenfläche für den Kondensatabgang 5 erreicht.

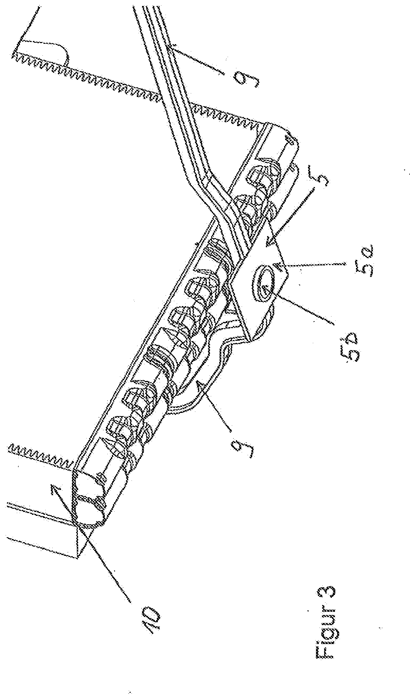

Figur 3 verdeutlicht noch einmal den Aufbau des Kondensatablaufes 5 mit der ebenen Platte 5a sowie der Öffnung 5b. Um den Kondensatabgang 5 besser darzustellen, wurde in der Figur 3 auf die Darstellung der Gehäuseteile 2 und 3 verzichtet. Es wird aber weiter darauf abgestellt, dass der Kondensatablauf 5 Bestandteil des Gehäuseteiles 2 bzw. des Gehäuseteiles 3 ist. Vorteilhafterweise bestehen die Gehäuseteile 2 und 3 aus Kunststoff und werden in einem Spritzgussvorgang gemeinsam mit dem Kondensatablauf 5 hergestellt. Dadurch entsteht ein einziges voll integriertes Bauteil, an weichem die Teile enthalten sind, die für die Realisierung des Gehäuses notwendig sind. Wie in Figur 3 dargestellt, ist der Kondensatablauf 5 über eine Nut-Feder 9 verbunden, wobei die Nut-Feder 9 im Bereich des Kondensatablaufes 5 verschweißt ist. Dazu werden vorzugsweise Ultraschallschweißgeräte eingesetzt. Mit diesen verschweißten Nähten wird eine hohe Wasserdichtheit des Kondensatablaufes 5 erzielt und gewährleistet, dass das Kondenswasser allein durch die Öffnung 5b aus der Klimaanlage 1 abgeleitet wird.

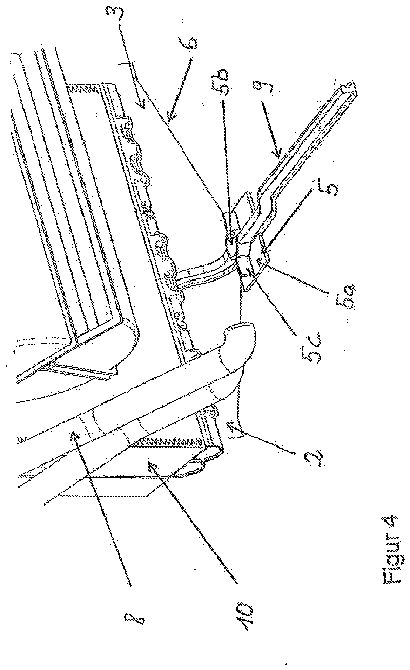

In Figur 4 ist der Kondensatablauf 5 noch einmal von innen aus der Klimaanlage 1 dargestellt. Auch hier ist noch einmal verdeutlicht, dass die Teile der Platte 5a des Kondensatablaufes 5 in die Nut-Feder 9 eingefügt und dort verschweißt sind. Aufgrund dieser ebenen Ausführung der Platte 5a können einfache Werkzeuge an der Nut-Feder 9 angesetzt werden, wobei die Platte 5a zu beiden Seiten der Nut-Feder 9 verschweißt wird. Darüber hinaus besitzt der Kondensatablauf 5 noch zwei Abstützelemente 5c, mit welchen sich der Kondensatablauf an den Gehäuseteilen 2 bzw. 3 der Klimaanlage 1 abstützt, was insbesondere nach dem Einbau in das Kraftfahrzeug von Bedeutung ist, da durch die Abstützelemente 5c die Stabilität der Platte 5a erhöht wird.

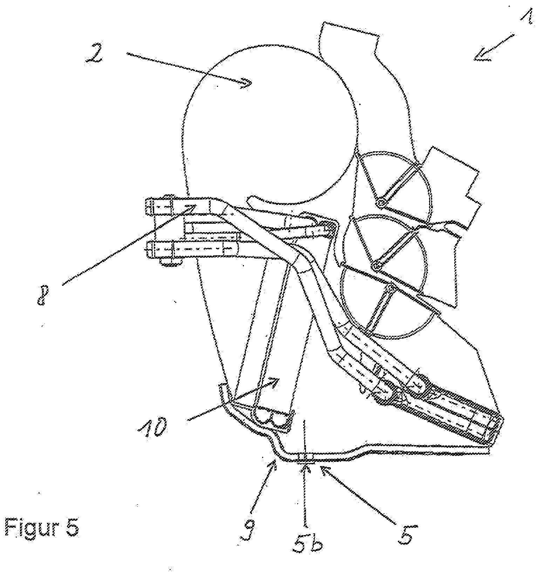

Um noch einmal die Funktion der Nut-Feder 9 deutlicher zu machen, ist in Figur 5 eine Seitenansicht des Klimagerätes 1 dargestellt. Die Federnut 9 umschließt das gesamte Gehäuse des Klimagerätes 1, wobei alle Verbindungsstellen des Gehäuseteiles 2 bzw. des Gehäuseteiles 3 über die Nut-Feder 9 miteinander verbunden sind. In Figur 5 ist nur ein Ausschnitt der Nut-Feder dargestellt, welcher sich im Bereich des Kondensatablaufes 5 befindet. Die Nut-Feder 9 nimmt dabei die Form der Gehäuseteile 2, 3 an und ist im Bereich des Kondensatablaufes 5 verschweißt.

Aufgrund des beschriebenen Ausführungsbeispieles ist eine ebene Schnittstellenfläche in Form der Platte 5a zur Anbindung der Klimaanlage 1 in das Kraftfahrzeug lediglich über die Trennung der Gehäuseteile 2, 3 entstanden. Dadurch kann auf zusätzliche Gehäuseteile verzichtet werden und eine werkzeuggerechte und verschweißbare Nut-Feder 9 eingesetzt werden.

## Patentansprüche

1. Klimaanlage mit einem zweiteilige Gehäuse, wobei die beiden Gehäuseteile (2, 3) über eine Nut-Feder (9) miteinander verbunden sind und das Gehäuse einen Kondensatablauf (5) aufweist, **dadurch gekennzeichnen, dass** der Kondensatablauf (5) in mindestens einem Gehäuseteil (2, 3) angrenzend an die Nut-Feder (9) integriert ist, wobei der Kondensatablauf (5) aus einer annähernd eben gestalteten Platte (5a) besteht, welche mittig eine durchgängige Öffnung (5b) aufweist.

2. Klimaanlage nach Anspruch 1, **dadurch gekennzeichnet, dass** der Kondensatablauf (5) einteilig ausgebildet ist und vollständig in ein Gehäuseteil (2, 3) integriert ist.

3. Klimaanlage nach Anspruch 1, **dadurch gekennzeichnet, dass** der Kondensatablauf (5) zweiteilig ausgebildet ist, wobei jeweils ein Teil des Kondensatablaufes mit einem Gehäuseteil (2, 3) verbunden ist und die beiden Teile des Kondensatablaufes (5) über die Nut-Feder (9) miteinander verbunden sind.

4. Klimaanlage nach Anspruch 1, 2 oder 3, **dadurch gekennzeichnet, dass** an jedem Gehäuseteil (2, 3) ein Teil der eben gestalteten Platte (5a) integriert ist, welche die Hälfte der durchgängigen Öffnung (5b) aufweist, wobei die Öffnung (5b) in Richtung der Nut-Feder (9) weist.

5. Klimaanlage nach mindestens einem der vorhergehenden Ansprüche, **dadurch gekennzeichnet, dass** jedes Gehäuseteil (2, 3) einteilig mit dem Kondensatablauf (5) bzw. einem Teil des Kondensatablaufes ausgebildet ist.

6. Klimaanlage nach Anspruch 5, **dadurch gekennzeichnet, dass** das einteilig mit dem Kondensatablauf (5) bzw. einem Teil des Kondensatablaufes (5) ausgebildete Gehäuseteil (2, 3) aus Kunststoff besteht.

7. Klimaanlage nach Anspruch 6, **dadurch gekennzeichnet, dass** das einteilig mit dem Kondensatablauf (5) bzw. einem Teil des Kondensatablaufes (5) ausgebildete Gehäuseteil (2, 3) in einem Spritzgussprozess hergestellt ist.

8. Klimaanlage nach mindestens einem der vorhergehenden Ansprüche, **dadurch gekennzeichnet, dass** jedes Gehäuseteil (2, 3) eine Kondenswasserschräge (6) aufweist, welche in den Kondensatablauf (5) mündet.

9. Klimaanlage nach mindestens einem der vorhergehenden Ansprüche, **dadurch gekennzeichnet, dass** die Nut-Feder (9) wenigstens im Bereich des Kondensatablaufes (5) wasserdicht gestaltet ist.

10. Klimaanlage nach Anspruch 9, **dadurch gekennzeichnet, dass** die Nut-Feder (9) geschweißt, vorzugsweise ultraschallgeschweißt, ist.

11. Klimaanlage nach Anspruch 9, **dadurch gekennzeichnet, dass** die Nut-Feder (9) mindestens gegenüber dem Kondensatablauf (5) ein dichtendes Element aufweist.

12. Klimaanlage nach Anspruch 11, **dadurch gekennzeichnet, dass** das dichtende Element als Dichtschnur ausgebildet ist.

## Claims

1. An air-conditioning system with a two-part housing, wherein the two housing parts (2, 3) are connected to one another via a tongue and groove (9) and the housing has a condensate drain (5), **characterised in that** the condensate drain (5) is integrated into at least one housing part (2, 3) adjacent to the tongue and groove (9), wherein the condensate drain (5) consists of a nearly flatly designed plate (5a) which has a continuous opening (5b) in its centre.

2. The air-conditioning system according to claim 1, **characterised in that** the condensate drain (5) is formed of one part and is fully integrated into a housing part (2, 3).

3. The air-conditioning system according to claim 1, **characterised in that** the condensate drain (5) is formed of two parts, wherein one respective part of the condensate drain is connected to a housing part (2, 3) and the two parts of the condensate drain (5) are connected to one another via the tongue and groove (9).

4. The air-conditioning system according to claim 1, 2 or 3, **characterised in that** a part of the flatly designed plate (5a) is integrated on each housing part (2, 3), the plate having half of the continuous opening (5b), wherein the opening (5b) is directed towards the tongue and groove (9).

5. The air-conditioning system according to at least one of the preceding claims, **characterised in that** each housing part (2, 3) is integrally formed with the condensate drain (5) or a part of the condensate drain.

6. The air-conditioning system according to claim 5, **characterised in that** the housing part (2, 3) integrally formed with the condensate drain (5) or a part of the condensate drain (5) consists of plastic.

7. The air-conditioning system according to claim 6, **characterised in that** the housing part (2, 3) integrally formed with the condensate drain (5) or a part of the condensate drain (5) is produced in an injection moulding process.

8. The air-conditioning system according to at least one of the preceding claims, **characterised in that** each housing part (2, 3) has a condensation water slant (6) which ends in the condensate drain (5).

9. The air-conditioning system according to at least one of the preceding claims, **characterised in that** the tongue and groove (9) is designed in a water-proof manner at least in the region of the condensate drain (5).

10. The air-conditioning system according to claim 9, **characterised in that** the tongue and groove (9) is welded, preferably ultrasonically welded.

11. The air-conditioning system according to claim 9, **characterised in that** the tongue and groove (9) has a sealing element at least with respect to the condensate drain (5).

12. The air-conditioning system according to claim 11, **characterised in that** the sealing element is formed as a sealing cord.

## Revendications

1. Système de climatisation comprenant un carter en deux parties, où les deux parties de carter (2, 3) sont assemblées l'une à l'autre par une pièce à emboîtement mâle / femelle (9), et le carter présente une évacuation de condensat (5), **caractérisé en ce que** l'évacuation de condensat (5) est intégrée dans au moins une partie de carter (2, 3) contiguë à la pièce à emboîtement mâle / femelle (9), où l'évacuation de condensat (5) se compose d'une plaque (5a) formée de manière presque plane, laquelle plaque présente au milieu une ouverture de passage (5b).

2. Système de climatisation selon la revendication 1, **caractérisé en ce que** l'évacuation de condensat (5) est configurée de façon monobloc et est complètement intégrée dans une partie de carter (2, 3).

3. Système de climatisation selon la revendication 1, **caractérisé en ce que** l'évacuation de condensat (5) est configurée en deux parties, où une partie de l'évacuation de condensat est à chaque fois reliée à une partie de carter (2, 3), et les deux parties de l'évacuation de condensat (5) sont assemblées l'une à l'autre par une pièce à emboîtement mâle / femelle (9).

4. Système de climatisation selon la revendication 1, 2 ou 3, **caractérisé en ce qu'**une partie de la plaque (5a) configurée de façon plane est intégrée à chaque partie de carter (2, 3), laquelle plaque présente la moitié de l'ouverture de passage (5b), où l'ouverture (5b) pointe en direction de la pièce à emboîtement mâle / femelle (9).

5. Système de climatisation selon au moins l'une quelconque des revendications précédentes, **caractérisé en ce que** chaque partie de carter (2, 3) est configurée en formant une seule et même pièce avec l'évacuation de condensat (5) ou avec une partie de l'évacuation de condensat.

6. Système de climatisation selon la revendication 5, **caractérisé en ce que** la partie de carter (2, 3), configurée en formant une seule et même pièce avec l'évacuation de condensat (5) ou avec une partie de l'évacuation de condensat (5), est en matière plastique.

7. Système de climatisation selon la revendication 6, **caractérisé en ce que** la partie de carter (2, 3), configurée en formant une seule et même pièce avec l'évacuation de condensat (5) ou avec une partie de l'évacuation de condensat (5), est fabriquée suivant un processus de moulage par injection.

8. Système de climatisation selon au moins l'une quelconque des revendications précédentes, **caractérisé en ce que** chaque partie de carter (2, 3), présente une pente d'évacuation (6) de l'eau de condensation, pente d'évacuation qui débouche dans l'évacuation de condensat (5).

9. Système de climatisation selon au moins l'une quelconque des revendications précédentes, **caractérisé en ce que** la pièce à emboîtement mâle / femelle (9) est configurée, en étant étanche à l'eau, au moins dans la zone de l'évacuation de condensat (5).

10. Système de climatisation selon la revendication 9, **caractérisé en ce que** la pièce à emboîtement mâle / femelle (9) est soudée, de préférence soudée par ultrasons.

11. Système de climatisation selon la revendication 9, **caractérisé en ce que** la pièce à emboîtement mâle / femelle (9) présente un élément d'étanchéité au moins par rapport à l'évacuation de condensat (5).

12. Système de climatisation selon la revendication 11, **caractérisé en ce que** l'élément d'étanchéité est configuré comme un cordon d'étanchéité.
